# EUROPEAN PATENT SPECIFICATION

(11) **EP 3 206 018 B1**
(45) Date of publication and mention of the grant of the patent: **05.10.2022**
(21) Application number: 15848393.3
(22) Date of filing: 25.09.2015
(51) Int. Cl.: G01N 21/64

(54) **DEVICE FOR DETECTION OF FLUORESCENCE IN LIQUID AND METHOD FOR DETECTION OF FLUORESCENCE IN LIQUID**
VORRICHTUNG ZUM NACHWEIS VON FLUORESZENZ IN FLÜSSIGKEIT UND VERFAHREN ZUM NACHWEIS VON FLUORESZENZ IN FLÜSSIGKEIT
DISPOSITIF DE DÉTECTION DE FLUORESCENCE DANS UN LIQUIDE ET PROCÉDÉ DE DÉTECTION DE FLUORESCENCE DANS UN LIQUIDE

(30) Priority: 10.10.2014 JP 2014209075; 21.11.2014 JP 2014236527
(43) Date of publication of application: 16.08.2017
(73) Proprietor: Azbil Corporation, Chiyoda-ku Tokyo 100-6419 (JP)
(72) Inventor: OBARA, Daisuke, Tokyo 100-6419 (JP); FURUYA, Masashi, Tokyo 100-6419 (JP)
(74) Representative: Lavoix
(86) International application number: PCT/JP2015/077156
(87) International publication number: WO 2016/056405

(56) References cited:
- WO-A1-2012/135565
- CN-A- 101 988 897
- DE-A1-102004 008 762
- JP-A- H0 815 157
- JP-A- S62 212 552
- JP-A- 2003 227 813
- JP-A- 2008 529 000
- JP-A- 2012 145 390
- JP-A- 2013 148 391
- HANS BARTH ET AL: "In-situ analysis of water quality: spectral attenuation and fluorescence", PROCEEDINGS OPTICAL DIAGNOSTICS OF LIVING CELLS II, vol. 3107, 23 May 1997 (1997-05-23), XP055295681, US ISSN: 0277-786X, DOI: 10.1117/12.274734 ISBN: 978-1-5106-1324-9
- NAOMI HUDSON ET AL: "Fluorescence analysis of dissolved organic matter in natural, waste and polluted waters-a review", RIVER RESEARCH AND APPLICATIONS, vol. 23, no. 6, 2 January 2007 (2007-01-02), pages 631-649, XP055451577, ISSN: 1535-1459, DOI: 10.1002/rra.1005

## Description

### [Technical Field]

The present invention relates to a detection technique, and relates to an in-liquid fluorescence detection device and a method of detecting fluorescence in a liquid.

### [Technical Background]

DE 10 2004 008 762 A1 discloses identifying bioparticles comprising locating an individual particle on a substrate; irradiating a particle with a laser to form Raman spectrum; and comparing the formed Raman spectra with Raman spectra of different particles.

JP 2012-145390 A discloses a multiwavelength fluorescence measuring device for detecting an object by irradiating laser light toward the object and receiving light having a different wavelength from that of the laser light returning from the object, and object identification method.

HANS BARTH ET AL: "In-situ analysis of water quality: spectral attenuation and fluorescence", PROCEEDINGS OPTICAL DIAGNOSTICS OF LIVING CELLS II, vol. 3107, 23 May 1997 discloses a device and a method for in-situ analysis of water quality by fluorescence and spectral attenuation.

A method of detecting fluorescent particles included in a gas as an inspection object (for example, refer to Patent Literatures 1 and 2) and a method of detecting fluorescent particles included in a liquid as an inspection object (for example, refer to Patent Literature 3) are proposed. In every method, it is determined that particles exist when an inspection object is irradiated with an excitation light and fluorescence is detected.

### [Citation List]

### [Patent Literature]

[Patent Literature 1] Japanese Patent No. 4377064
[Patent Literature 2] JP-A-2012-88304
[Patent Literature 3] JP-A-2013-117466

### [Summary of Invention]

### [Problems that the invention is to Solve]

In general, Raman scattering light with a level of intensity that interferes with detection of fluorescent particles emitting autofluorescence is not generated when a gas is irradiated with an excitation light, however, when a liquid is irradiated with an excitation light, Raman scattering light with the level of intensity that interferes with detection of fluorescent particles emitting autofluorescence may be generated due to molecules forming a liquid such as water or molecules contained in the liquid. As a wavelength of Raman scattering light is longer than a wavelength of the excitation light, the wavelength may overlap with a wavelength of fluorescence emitted by fluorescent particles contained in the inspection object. The inspection object may also contain plural kinds of fluorescent particles.

In view of the above, an object of the present invention is to provide an in-liquid fluorescence detection device and a method of detecting fluorescence in a liquid capable of accurately detecting fluorescence in the liquid.

### [Means for Solving the Problems]

An in-liquid fluorescence detection device for determining a first substance and a second substance in a liquid according to claim 1 is provided.

A method of detecting fluorescence in a liquid according to claim 9 is provided.

Preferred embodiments of the invention are the subject matter of the dependent claims, whose content is to be understood as forming an integral part of the present description.

### [Advantage of the Invention]

According to the present invention, an in-liquid fluorescence detection device and a method of detecting fluorescence in a liquid capable of accurately detecting fluorescence in the liquid can be provided.

### [Brief Description of the Drawings]

[Fig. 1] Fig. 1 is a schematic view of an in-liquid fluorescence detection device according to a first embodiment of the present invention.
[Fig. 2] Fig. 2 shows examples of fluorescence spectra of autofluorescence emitted by microorganisms according to the first embodiment of the present invention.
[Fig. 3] Fig. 3 shows examples of fluorescence spectra of autofluorescence emitted by abiotic particles according to the first embodiment of the present invention.
[Fig. 4] Fig. 4 is a graph obtained by overlapping the spectra shown in Fig. 2 and Fig. 3 with each other.
[Fig. 5] Fig. 5 shows an example of a fluorescence spectrum of autofluorescence emitted by a microorganism according to the first embodiment of the present invention.
[Fig. 6] Fig. 6 shows examples of fluorescence spectra of autofluorescence emitted by abiotic particles according to the first embodiment of the present invention.
[Fig. 7] Fig. 7 is a graph obtained by overlapping the spectra shown in Fig. 5 and Fig. 6 with each other.
[Fig. 8] Fig. 8 shows an example of a fluorescence spectrum of autofluorescence emitted by a microorganism according to the first embodiment of the present invention.
[Fig. 9] Fig. 9 shows an example of a fluorescence spectrum of autofluorescence emitted by abiotic particles according to the first embodiment of the present invention.
[Fig. 10] Fig. 10 is a graph obtained by overlapping the spectra shown in Fig. 9 and Fig. 10 with each other.
[Fig. 11] Fig. 11 shows an example of a fluorescence spectrum of autofluorescence emitted by abiotic particles formed of glass according to a second embodiment of the present invention.
[Fig. 12] Fig. 12 shows an example of a fluorescence spectrum of autofluorescence emitted by abiotic particles formed of PET according to the second embodiment of the present invention.
[Fig. 13] Fig. 13 is a graph obtained by overlapping the spectra shown in Fig. 11 and Fig. 12 with each other.
[Fig. 14] Fig. 14 shows an example of a fluorescence spectrum of fluorescence emitted by alcohol for disinfection according to a third embodiment of the present invention.
[Fig. 15] Fig. 15 shows an example of a fluorescence spectrum of fluorescence emitted by green tea according to the third embodiment of the present invention.
[Fig. 16] Fig. 16 is a graph obtained by overlapping the spectra shown in Fig. 14 and Fig. 15 with each other.

### [Mode for Carrying Out the Invention]

Hereinafter, embodiments of the present invention will be explained. In the description of the drawings, the same or similar numerals and signs are given to the same or similar portions. However, the drawings are schematic. Accordingly, specific sizes and so on should be determined by referring to the following explanation. Needless to say, portions in which relations and ratios of respective sizes are different from one another are included in mutual drawings.

### (First Embodiment)

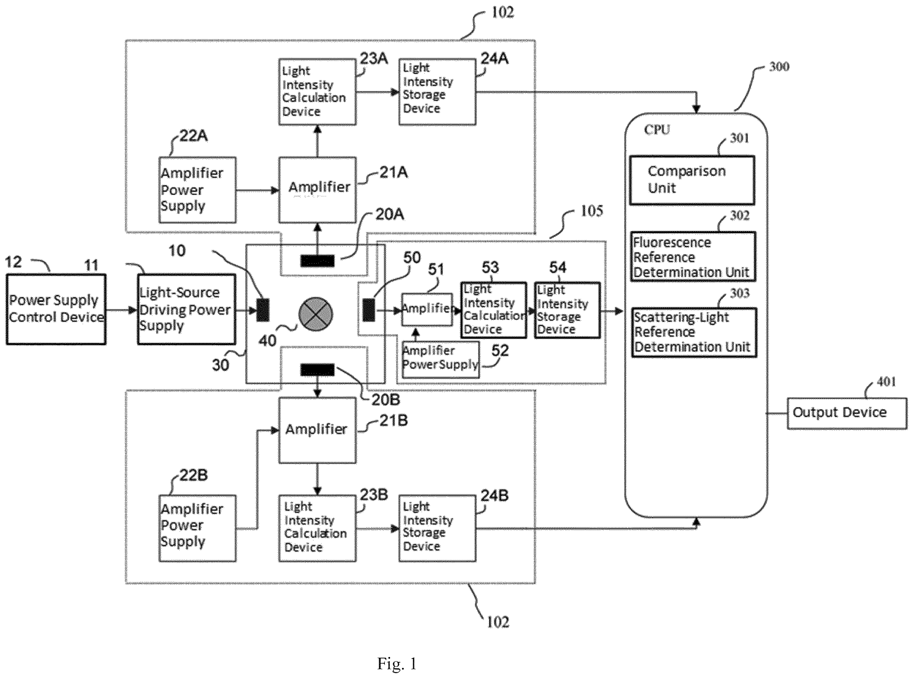

An in-liquid fluorescence detection device according to a first embodiment of the present invention includes a light source 10 emitting an excitation light having a wavelength in which Raman scattering light is generated in a liquid in a wavelength band between first and second fluorescence wavelength bands toward the liquid in a cell 40 which can contain a first substance which emits light having higher intensities in the first fluorescence wavelength band as compared with in the second fluorescence wavelength band and a second substance which emits light having higher intensities in the second fluorescence wavelength band as compared with in the first fluorescence wavelength band, and a fluorescence detection unit 102 detecting light in the first and second fluorescence wavelength bands as shown in Fig. 1.

For example, the first substance which can be contained in the liquid in the cell 40 is a biotic particle such as microorganisms and the second substance is an abiotic particle. The description that the liquid can contain the first substance and the second substance means that there is a possibility that liquid contains the first substance and the second substance, and there is a case where it is determined that the liquid does not contain the first substance and the second substance as a result of the inspection.

The in-liquid fluorescence detection device may further include a scattering light detection unit 105 detecting scattering light having the same wavelength as the excitation light, which is generated in the liquid irradiated with the excitation light. The light source 10, the fluorescence detection unit 102, and the scattering light detection unit 105 are provided in a casing 30. A light source driving power supply 11 supplying power to the light source 10 is connected to the light source 10. A power supply control device 12 controlling the power to be supplied to the light source 10 is connected to the light source driving power supply 11. The liquid irradiated with the excitation light flows inside the transparent cell 40. The liquid irradiated with the excitation light is, for example, pure water, pharmaceutical water, injection solvent and culture solution, however, the liquid is not limited to the above. The cell 40 may be connected to, for example, piping of the plant, however, the present invention is not limited to the above.

The light source 10 emits an excitation light of a broadband wavelength toward the liquid flowing inside the cell 40. As the light source 10, for example, a light emitting diode (LED) and laser can be used. A wavelength of the excitation light is, for example, 250 to 550 nm. The excitation light may be visible light as well as ultraviolet light. In the case where the excitation light is visible light, a wavelength of the excitation light is, for example, in a range of 400 to 550 nm, and for example, 405 nm. In the case where the excitation light is ultraviolet light, a wavelength of the excitation light is, for example, in a range of 300 to 380 nm, and for example, 340 nm. However, the wavelengths of the excitation light are not limited to the above.

In the case where microorganisms such as bacteria are contained in the liquid inside the cell 40, nicotinamide adenine dinucleotide, riboflavin and the like contained in the microorganisms irradiated with the excitation light emit fluorescence. Also in the case where non-microorganism particles formed of, for example, metal or resin are contained in the liquid inside the cell 40, non-microorganism particles irradiated with the excitation light may emit fluorescence or light the wavelength band of which overlaps with that of fluorescence. The fluorescence includes autofluorescence.

For example, when the liquid is water manufactured by a purified water producing device, water may contain non-microorganism particles formed of materials for the purified water producing device. For example, particles containing at least one material selected from polypropylene, polyethylene, polytetrafluoroethylene (PTFE), olefin, polycarbonate, polyurethane and the like can be generated from a filter or a housing which can be provided in the purified water producing device. For example, particles containing at least one material selected from, for example, silicone rubber, nitrile rubber (NBR), ethylene-propylene rubber (EPDM), fluororubber, kalrez, PTFE and the like can be generated from a gasket which can be provided in the purified water producing device. Moreover, particles containing at least one material selected from viton, fluororesin, silicone resin, polyamide, polyphenylene sulfide (PPS), perfluoroelastomer and the like can be generated from a pump which can be provided in the purified water producing device. Furthermore, particles containing, for example, PTFE and the like can be generated from a sealing which can be provided in the purified water producing device. Additionally, particles containing a metal material such as oxidation stainless steel can be generated from piping which can be provided in the purified water producing device. The above-described materials of particles to be generated from the purified water producing device may emit fluorescence or light the wavelength band of which overlaps with that of fluorescence when irradiated with the excitation light.

A spectrum of light in the fluorescence band emitted by microorganisms and non-microorganism particles differs according to types of microorganisms and non-microorganism particles. An intensity of light in the fluorescence wavelength band emitted by microorganisms generally tends to be higher on the long wavelength side than an intensity of light in the fluorescence wavelength band emitted by non-microorganism particles. Accordingly, it is possible to determine whether substances such as particles contained in the liquid are microorganisms or non-microorganism particles based on intensities of light in the fluorescence band detected in plural wavelengths.

When the liquid is irradiated with the excitation light, the excitation light is scattered by molecules contained in the liquid, and Raman scattering light having a longer wavelength than that of the excitation light is generated. For example, Raman scattering light having wavelengths 50 to 100 nm or 60 to 70 nm longer than the wavelength of the excitation light is generated in water. The wavelength band of Raman scattering light varies chiefly according to the type of molecules and the wavelength of the excitation light. Specifically, when the wavelength of the excitation light is 380 nm, a peak of Raman scattering light is generated in the vicinity of 436 nm in wavelength in water. When the wavelength of the excitation light is 405 nm, a peak of Raman scattering light is generated in the vicinity of 469 nm in wavelength in water. When the wavelength of the excitation light is 490 nm, a peak of Raman scattering light is generated in the vicinity of 535 nm and in the vicinity of 585 nm in wavelength in water.

Accordingly, when the peak wavelength of Raman scattering light overlaps with the wavelength of light in the fluorescence band such as autofluorescence with a low intensity generated by microorganisms or non-microorganism particles, Raman scattering light acts as stray light, therefore, it may be difficult to detect autofluorescence with a low intensity which is an original detection object. Moreover, it may be wrongly determined that microorganisms or non-microorganism particles are contained in the liquid.

In response to the above, the in-liquid fluorescence detection device according to the first embodiment emits the excitation light having a wavelength in which Raman scattering light is generated in a wavelength band between the first fluorescence wavelength band in which the intensity of fluorescence emitted by microorganisms is higher and the second fluorescence wavelength band in which the intensity of fluorescence emitted by non-microorganism particles is higher.

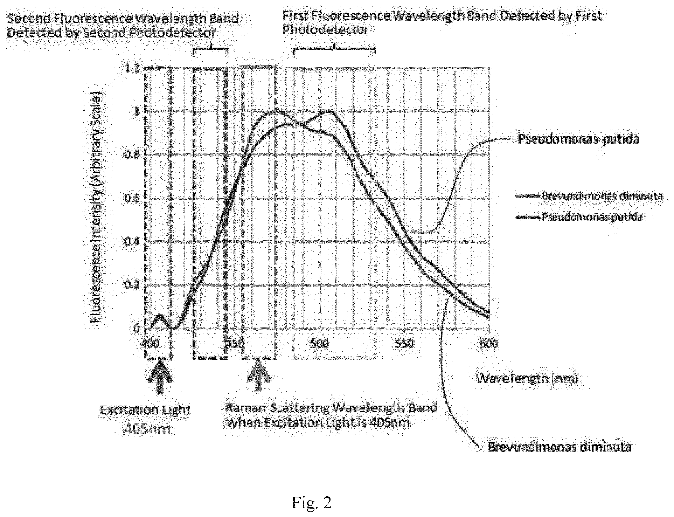

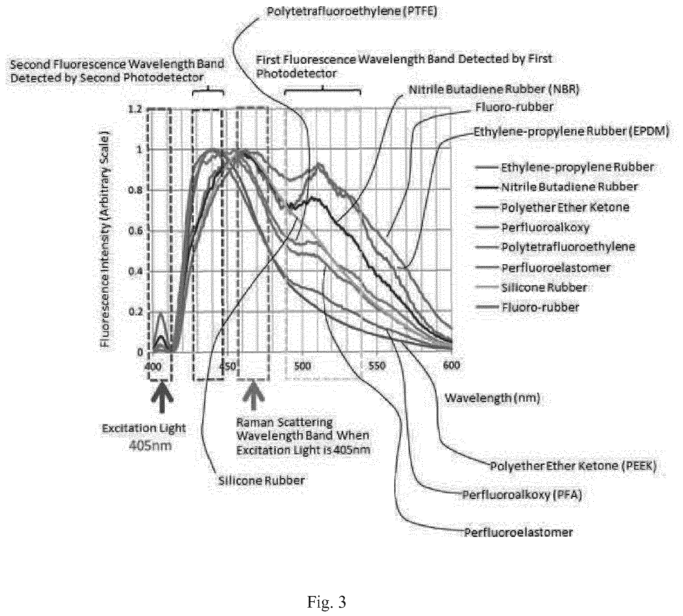

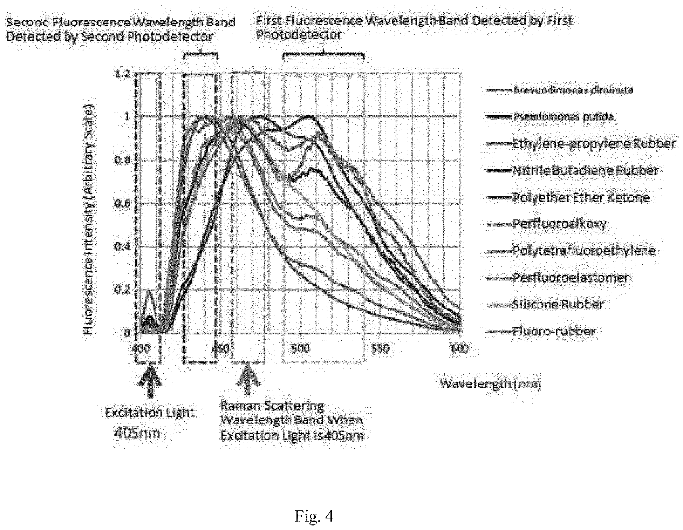

Fig. 2 shows examples of spectra of autofluorescence emitted by Brevundimonas diminuta (ATCC 19146) and Pseudomonas putida (ATCC 12633) as aquatic bacteria obtained when irradiated with an excitation light having a wavelength of 405 nm. Fig. 3 shows examples of spectra of autofluorescence emitted by abiotic particles generated from various resin gasket materials when irradiated with the excitation light having the wavelength of 405 nm. Fig. 4 is a graph obtained by overlapping the spectra shown in Fig. 2 with the spectra shown in Fig. 3. As shown in Fig. 2 to Fig. 4, the spectra of autofluorescence emitted by microorganisms have higher intensities on the long wavelength side as compared with the spectra of autofluorescence emitted by abiotic particles. In contrast, the spectra of autofluorescence emitted by abiotic particles have higher intensities on the short wavelength side as compared with the spectra of autofluorescence emitted by microorganisms. In this case, the peak of Raman scattering light is generated in the vicinity of 469 nm in wavelength in water. The spectra of autofluorescence emitted by microorganisms have higher intensities on the longer wavelength side of the peak of Raman scattering light. In contrast, the spectra of autofluorescence emitted by abiotic particles have higher intensities on the shorter wavelength side of the peak of Raman scattering light.

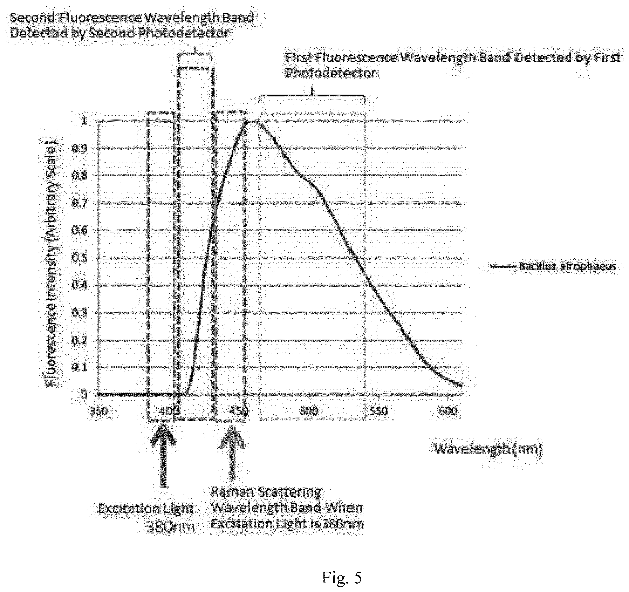

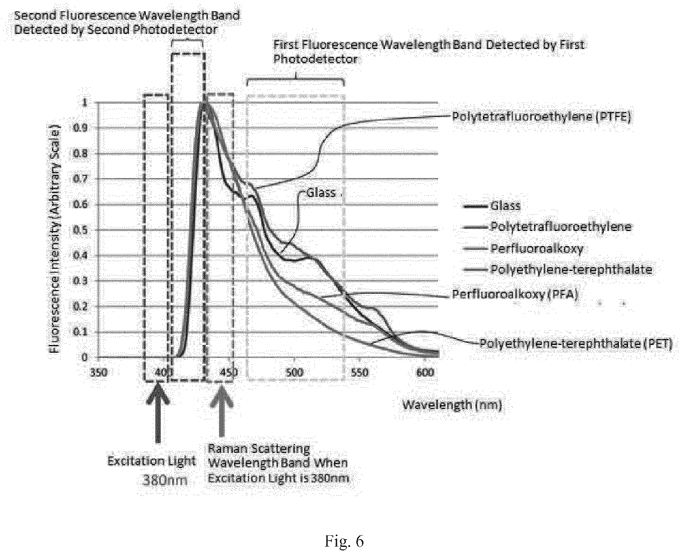

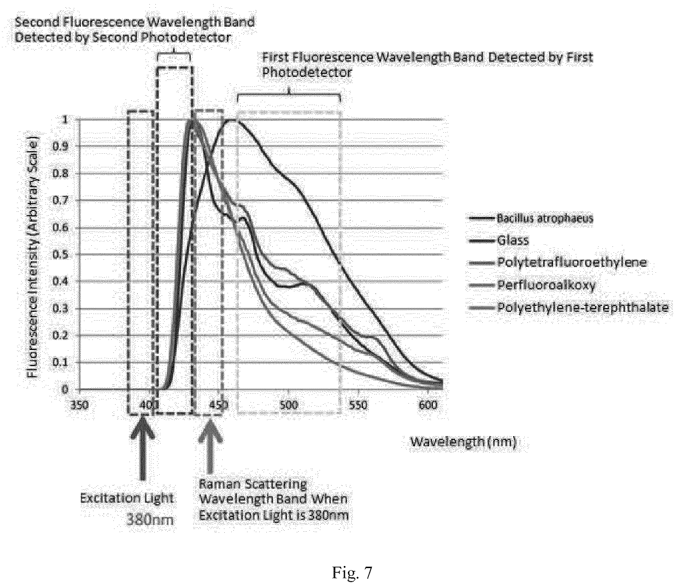

Fig. 5 shows an example of a spectrum of autofluorescence emitted by Bacillus atrophaeus as Bacillus subtilis obtained when irradiated with an excitation light having a wavelength of 380 nm. Fig. 6 shows examples of spectra of autofluorescence emitted by abiotic particles containing glass and various resin materials when irradiated with the excitation light having the wavelength of 380 nm. Fig. 7 is a graph obtained by overlapping the spectrum shown in Fig. 5 and the spectrum shown in Fig. 6 with each other. As shown in Fig. 5 to Fig. 7, the spectrum of autofluorescence emitted by the microorganism has higher intensities on the long wavelength side as compared with the spectra of autofluorescence emitted by abiotic particles. In contrast, the spectra of autofluorescence emitted by abiotic particles have higher intensities on the short wavelength side as compared with the spectrum of autofluorescence emitted by the microorganism. In this case, the peak of Raman scattering light is generated in the vicinity of 436 nm in wavelength in water. The spectrum of autofluorescence emitted by microorganism has higher intensities on the longer wavelength side of the peak of Raman scattering light. In contrast, the spectra of autofluorescence emitted by abiotic particles have higher intensities on the shorter wavelength side of the peak of Raman scattering light.

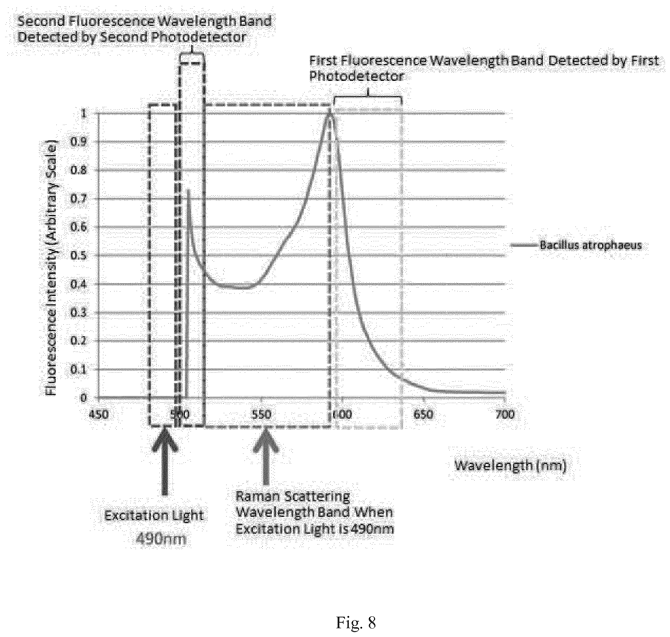

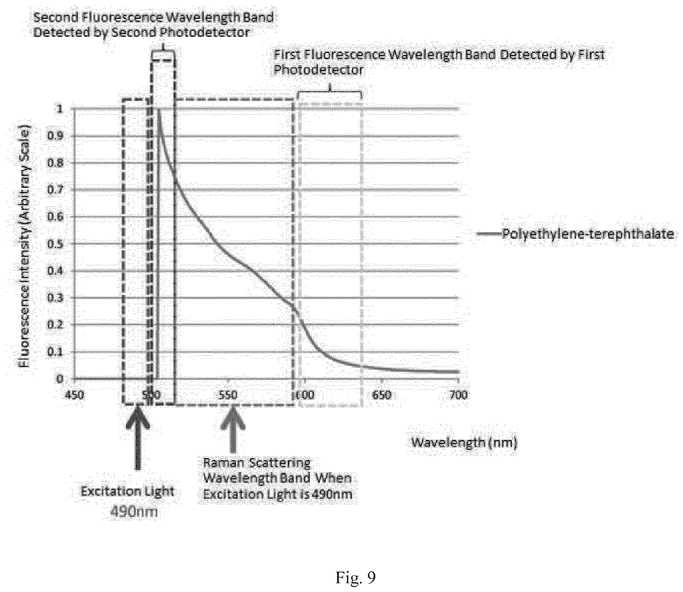

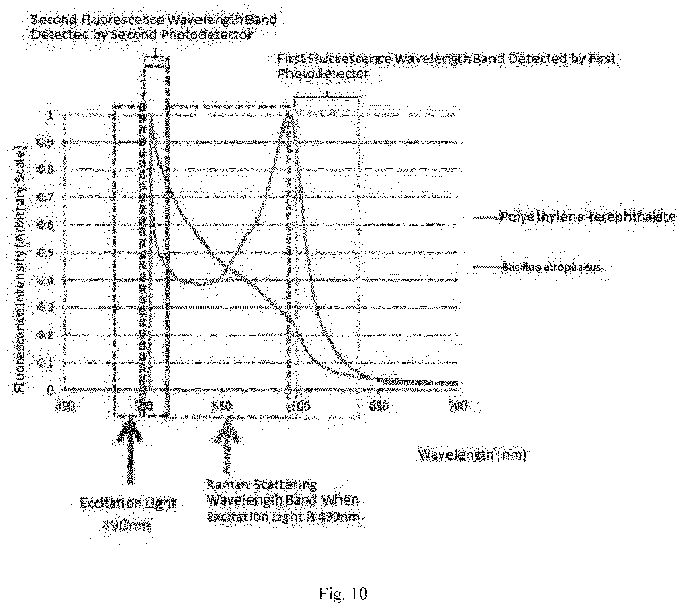

Fig. 8 shows an example of a spectrum of autofluorescence emitted by Bacillus atrophaeus as Bacillus subtilis obtained when irradiated with an excitation light having a wavelength of 490 nm. Fig. 9 shows an example of a spectrum of autofluorescence emitted by abiotic particles containing polyethylene-terephthalate (PET) when irradiated with the excitation light having the wavelength of 490 nm. Fig. 10 is a graph obtained by overlapping the spectrum shown in Fig. 8 with the spectrum shown in Fig. 9. As shown in Fig. 8 to Fig. 10, the spectrum of autofluorescence emitted by the microorganism has higher intensities on the long wavelength side as compared with the spectrum of autofluorescence emitted by abiotic particles. In contrast, the spectrum of autofluorescence emitted by abiotic particles has higher intensities on the short wavelength side as compared with the spectrum of autofluorescence emitted by the microorganism. In this case, the peaks of Raman scattering light are generated in the vicinity of 535 nm and in the vicinity of 585 nm in wavelength in water. The spectrum of autofluorescence emitted by microorganism has higher intensities on the longer wavelength side of the peaks of Raman scattering light. In contrast, the spectrum of autofluorescence emitted by abiotic particles has higher intensities on the shorter wavelength side of the peak of Raman scattering light.

The light source 10 shown in Fig. 1 emits an excitation light having a wavelength in which the wavelength band of Raman scattered light is positioned between the spectrum of autofluorescence emitted by microorganisms and the spectrum of autofluorescence emitted by abiotic particles. Alternatively, the light source 10 emits an excitation light having a wavelength in which the wavelength band of Raman scattered light is positioned in a portion where a lower intensity portion (on a short wavelength side of an intensity peak; e.g., comprising an intensity bottom) on the spectrum of autofluorescence emitted by microorganisms overlaps with a lower intensity portion (on a long wavelength side of an intensity peak; e.g., comprising an intensity bottom) on the spectrum of autofluorescence emitted by abiotic particles. (It is noted that the wavelength band of Raman scattered light may encompass one or more of the intensity peaks).

The fluorescence detection unit 102 detects light in fluorescence bands emitted by microorganisms or non-microorganism particles. The fluorescence detection unit 102 includes a first photodetector 20A receiving light in the first fluorescence wavelength band and a second photodetector 20B receiving light in the second fluorescence wavelength band which is different from the first fluorescence wavelength band. The first and second photodetectors 20A and 20B may be configured so as not to detect light in wavelength bands of Raman scattering light. For example, the wavelength band of Raman scattering light may be excluded from wavelength bands which can be detected by the first and second photodetectors 20A and 20B. It is also possible to arrange a filter, a bandpass filter, a long-pass filter, a short-pass filter and a dichroic mirror as well as wavelength selection means formed by combining the above and so on for blocking light in the wavelength band of Raman scatting light in a front stage of the first and second photodetectors 20A and 20B. As the first and second photodetectors 20A and 20B, photodiodes, photomultiplier tubes and so on may be used, which convert light energy into electric energy when receiving light.

An amplifier 21A amplifying electric current generated in the first photodetector 20A is connected to the first photodetector 20A. An amplifier power supply 22A supplying power to the amplifier 21A is connected to the amplifier 21A. A light intensity calculation device 23A receiving electric current amplified in the amplifier 21A and calculating a light intensity received by the first photodetector 20A is also connected to the amplifier 21A. The light intensity calculation device 23A calculates the light intensity, for example, based on an area of a spectrum of detected light. A light intensity storage device 24A storing the light intensity calculated by the light intensity calculation device 23A is connected to the light intensity calculation device 23A.

An amplifier 21B amplifying electric current generated in the second photodetector 20B is connected to the second photodetector 20B. An amplifier power supply 22B supplying power to the amplifier 21B is connected to the amplifier 21B. A light intensity calculation device 23B receiving electric current amplified in the amplifier 21B and calculating a light intensity received by the second photodetector 20B is also connected to the amplifier 21B. The light intensity calculation device 23B calculates the light intensity, for example, based on an area of a spectrum of detected light. A light intensity storage device 24B storing the light intensity calculated by the light intensity calculation device 23B is connected to the light intensity calculation device 23B.

The scattering light detection unit 105 detects scattering light generated by microorganisms, non-microorganism particles and air bubbles irradiated with an inspection light. The scattering light detection unit 105 includes a scattering light photodetector 50 receiving scattering light. As the scattering light photodetector 50, a photodiode or the like can be used, which convers light energy into electric energy when receiving light.

An amplifier 51 amplifying electric current generated in the scattering light photodetector 50 is connected to the scattering light photodetector 50. An amplifier power supply 52 supplying power to the amplifier 51 is connected to the amplifier 51. A light intensity calculation device 53 receiving electric current amplified in the amplifier 51 and calculating an intensity of scattering light received by the scattering light photodetector 50 is also connected to the amplifier 51. A light intensity storage device 54 storing the intensity of scattering light calculated by the light intensity calculation device 53 is connected to the light intensity calculation device 53.

When a liquid flows inside the cell 40, the light source 10 emits the excitation light and the fluorescence detection unit 102 measures an intensity of light in the first fluorescence wavelength band on the longer wavelength side of the wavelength band of Raman scattering light and an intensity of light in the second fluorescence wavelength band on the shorter wavelength side of the wavelength band of Raman scattering light, storing the intensities in time series in the light intensity storage devices 24A and 24B. The scattering light detection unit 105 detects scatting light and stores light intensities of scattering light in time series in the light intensity storage device 54.

The in-liquid fluorescence detection device according to the first embodiment further includes a central processing unit (CPU) 300. The CPU 300 includes a scattering-light reference determination unit 303. The scattering-light reference determination unit 303 reads a value of the intensity of light in the first fluorescence wavelength band and a value of the intensity of light in the second fluorescence wavelength band from the light intensity storage devices 24A and 24B. The scattering-light reference determination unit 303 reads an intensity of scattering light from the light intensity storage unit 54.

The scattering-light reference determination unit 303 determines that water as an inspection object contains air bubbles when the fluorescence detection unit 102 does not detect light in the fluorescence band and the scattering light detection unit 105 detects scattering light. Moreover, the scattering-light reference determination unit 303 may determine that water as the inspection object does not contain microorganisms and non-microorganism particles when the fluorescence detection unit 102 does not detect light in the fluorescence band, the scattering light detection unit 105 detects scattering light. Furthermore, scattering-light reference determination unit 303 may determine that water as the inspection object contains microorganisms or non-microorganism particles when the fluorescence detection unit 102 detects light in the fluorescence band and the scattering light detection unit 105 detects scattering light.

The CPU 300 may further include a comparison unit 301 and a fluorescence reference determination unit 302. The comparison unit 301 reads a value of the intensity of the detected light in the first fluorescence wavelength band and a value of the intensity of light in the second fluorescence wavelength band from the light intensity storage units 24A and 24B. The comparison unit 301 also compares the intensity of light in the first fluorescence wavelength band with the intensity of light in the second fluorescence wavelength band. The fluorescence reference determination unit 302 determines that the liquid contains microorganisms when the intensity of light in the first fluorescence wavelength band on the longer wavelength side of the wavelength band of Raman scattering light is higher than the intensity of light in the second fluorescence wavelength band on the shorter wavelength side of the wavelength band of Raman scattering light. The fluorescence reference determination unit 302 also determines that the liquid contains abiotic particles when the intensity of light in the second fluorescence wavelength band on the shorter wavelength side of the wavelength band of Raman scattering light is higher than the intensity of light in the first fluorescence wavelength band on the longer wavelength side of the wavelength band of Raman scattering light.

The fluorescence reference determination unit 302 outputs, for example, a determination result from an output device 401. As the output device 401, a display, a speaker, a printer and the like can be used.

In the above explained in-liquid fluorescence detection device according to the first embodiment, it is possible to suppress a case where Raman scatting light is wrongly determined as autofluorescence emitted by microorganisms or non-microorganism particles contained in the liquid even when Raman scattering light is generated.

### (Second Embodiment)

In a second embodiment, a method of discriminating between a first abiotic particle and a second abiotic particle different from the first abiotic particle will be explained.

In the second embodiment, the light source 10 shown in Fig. 1 emits an excitation light having a wavelength in which the wavelength band of Raman scattered light is positioned between a spectrum of autofluorescence emitted by the first abiotic particle and a spectrum of autofluorescence emitted by the second abiotic particle. Alternatively, the light source 10 emits an excitation light having a wavelength in which the wavelength band of Raman scattered light is positioned in a portion where a lower intensity portion (on a long wavelength side of an intensity peak; e.g., comprising an intensity bottom) on the spectrum of autofluorescence emitted by the first abiotic particle overlaps with a lower intentisy portion (on a long wavelength side of an intensity peak; e.g., comprising an intensity bottom) on the spectrum of autofluorescence emitted by the second abiotic particle. (It is noted that the wavelength band of Raman scattered light may encompass one or more of the intensity peaks).

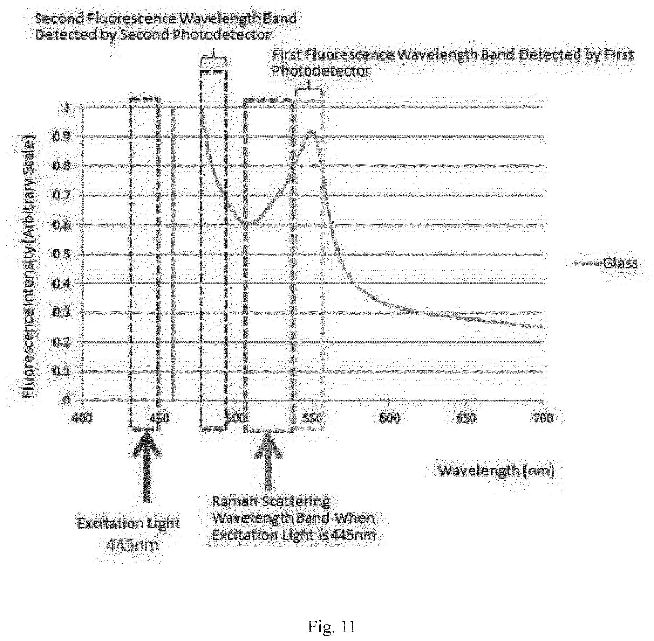

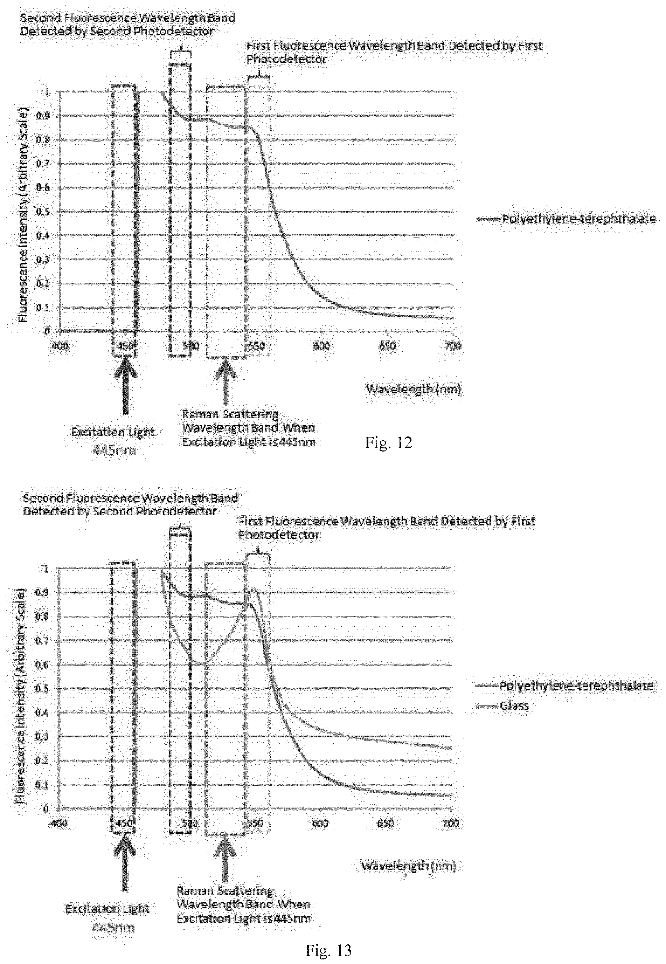

Fig. 11 shows an example of a spectrum of autofluorescence emitted by abiotic particles formed of glass when irradiated with an excitation light having a wavelength of 445 nm. Fig. 12 shows an example of a spectrum of autofluorescence emitted by abiotic particles formed of polyethylene-terephthalate (PET) when irradiated with the excitation light having the wavelength of 445 nm. Fig. 13 is a graph obtained by overlapping the spectrum shown in Fig. 11 with the spectrum shown in Fig. 12. As shown in Fig. 11 to Fig. 13, the spectrum of autofluorescence emitted by abiotic particles formed of glass has higher intensities on the long wavelength side as compared with the spectrum of autofluorescence emitted by abiotic particles formed of PET. In contrast, the spectrum of autofluorescence emitted by abiotic particles formed of PET has higher intensities on the short wavelength side as compared with the spectrum of autofluorescence emitted by abiotic particles formed of glass. In this case, a peak of Raman scattering light is generated in the vicinity of 524 nm in wavelength in water. The spectrum of autofluorescence emitted by abiotic particles formed of glass has higher intensities on the longer wavelength side of the peak of Raman scattering light. In contrast, the spectrum of autofluorescence emitted by abiotic particles formed of PET has higher intensities on the shorter wavelength side of the peak of Raman scattering light.

In the second embodiment, the comparison unit 301 in the CPU 300 shown in Fig. 1 compares an intensity of light in the first fluorescence wavelength band with an intensity of light in the second fluorescence wavelength band. The fluorescence reference determination unit 302 determines that the liquid contains the first abiotic particle when the intensity of light in the first fluorescence wavelength band on the long wavelength side of the wavelength band of Raman scattering light is higher than the intensity of light in the second fluorescence wavelength band on the short wavelength side of the wavelength band of Raman scattering light. The fluorescence reference determination unit 302 also determines that the liquid contains the second abiotic particle when the intensity of light in the second fluorescence wavelength band on the short wavelength side of the wavelength band of Raman scattering light is higher than the intensity of light in the first fluorescence wavelength band on the long wavelength side of the wavelength band of Raman scattering light.

### (Third Embodiment)

In a third embodiment, a method of discriminating between a first fluorescence substance dissolved in a liquid and a second fluorescence substance dissolved in the liquid different from the first fluorescence substance will be explained.

In the third embodiment, the light source 10 shown in Fig. 1 emits an excitation light having a wavelength in which the wavelength band of Raman scattered light is positioned between a spectrum of fluorescence emitted by the first fluorescence substance dissolved in the liquid and a spectrum of fluorescence emitted by the second fluorescence substance dissolved in the liquid. Alternatively, the light source 10 emits an excitation light having a wavelength in which the wavelength band of Raman scattering light is positioned in a portion where a lower intensity portion (on a short wavelength side of an intensity peak; e.g., comprising an intensity bottom) on the spectrum of fluorescence emitted by the first fluorescence substance dissolved in the liquid overlaps with a lower intensity portion (on a long wavelength side of an intensity peak; e.g., comprising an intensity bottom) on the spectrum of fluorescence emitted by the second fluorescence substance dissolved in the liquid. (It is noted that the wavelength band of Raman scattered light may encompass one or more of the intensity peaks).

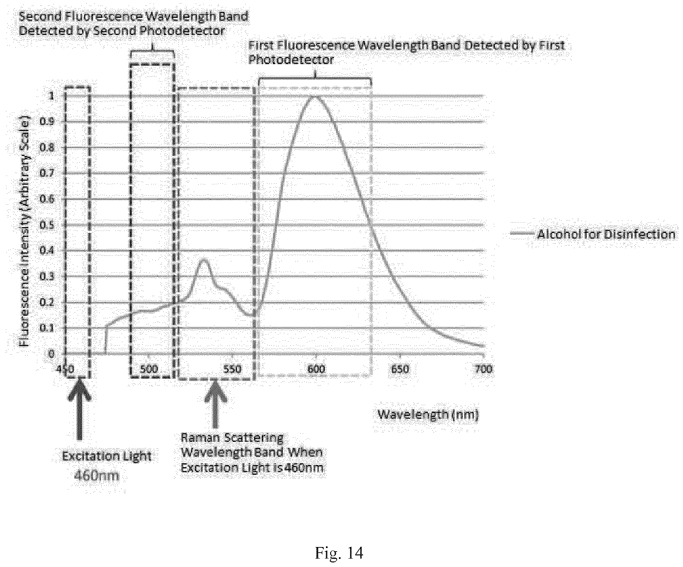

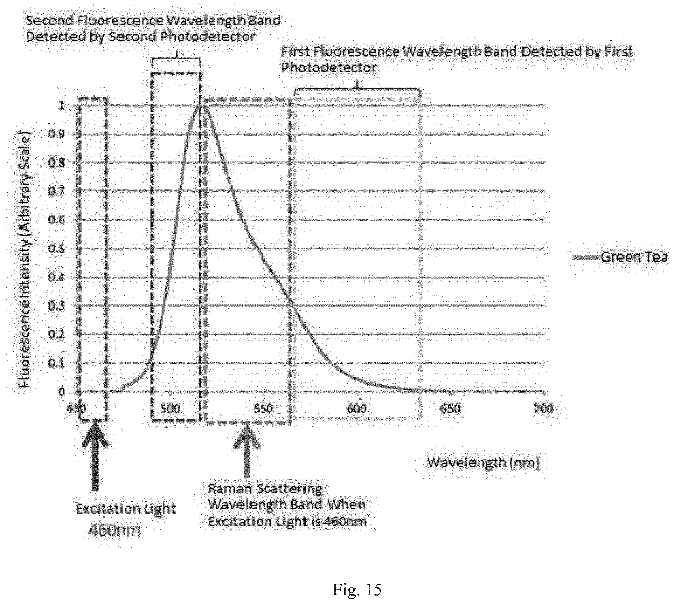

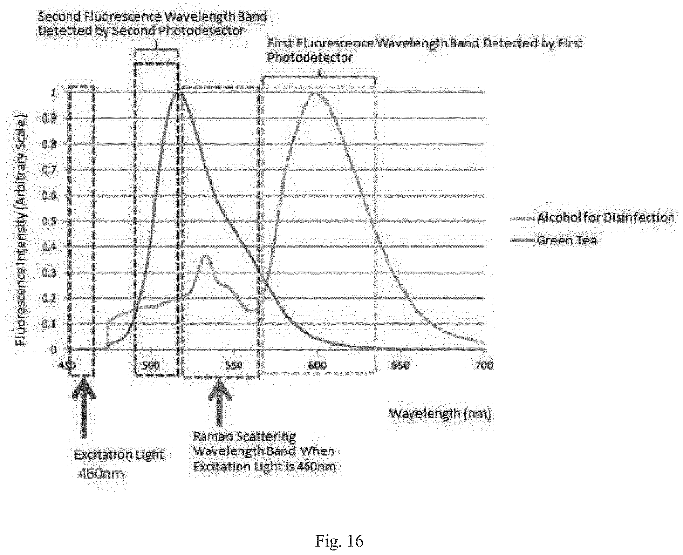

Fig. 14 shows an example of a spectrum of fluorescence emitted by additives such as perfume and pigment contained in alcohol for disinfection when irradiated with an excitation light having a wavelength of 460 nm. Fig. 15 shows an example of a spectrum of fluorescence emitted by chlorophyll contained in green tea when irradiated with the excitation light having the wavelength of 460 nm. Fig. 16 is a graph obtained by overlapping the spectrum shown in Fig. 14 with the spectrum shown in Fig. 15. As shown in Fig. 14 to Fig. 16, the spectrum of fluorescence emitted by the additives such as perfume and pigment contained in alcohol for disinfection has higher intensities on the long wavelength side as compared with the spectrum of fluorescence emitted by chlorophyll contained in green tea. In contrast, the spectrum of fluorescence emitted by chlorophyll contained in green tea has higher intensities on the short wavelength side as compared with the spectrum of fluorescence emitted by the additives such as perfume and pigment contained in alcohol for disinfection. In this case, a peak of Raman scattering light is generated in the vicinity of 545 nm in wavelength in water. The spectrum of fluorescence emitted by the additives such as perfume and pigment contained in alcohol for disinfection has higher intensities on the longer wavelength side of the peak of Raman scattering light. In contrast, the spectrum of fluorescence emitted by chlorophyll contained in green tea has higher intensities on the shorter wavelength side of the peak of Raman scattering light.

In the third embodiment, the comparison unit 301 in the CPU 300 shown in Fig. 1 compares an intensity of light in the first fluorescence wavelength band with an intensity of light in the second fluorescence wavelength band. The fluorescence reference determination unit 302 determines that the liquid contains the additives such as perfume and pigment contained in alcohol for disinfection when the intensity of light in the first fluorescence wavelength band on the long wavelength side of the wavelength band of Raman scattering light is higher than the intensity of light in the second fluorescence wavelength band on the shorter wavelength side of the wavelength band of Raman scattering light. The fluorescence reference determination unit 302 also determines that the liquid contains chlorophyll contained in green tea when the intensity of light in the second fluorescence wavelength band on the short wavelength side of the wavelength band of Raman scattering light is higher than the intensity of light in the first fluorescence wavelength band on the longer wavelength side of the wavelength band of Raman scattering light.

According to the third embodiment, it is possible to detect that a liquid flowing in piping has been switched from alcohol for disinfection to green tea, for example, in a beverage plant.

### (Other embodiments)

The present invention has been described as above based on embodiments, however, it should not be understood that description and drawings forming part of the disclosure limit the invention, since the scope is defined by the appended claims. Various alternative embodiments, examples and operation techniques will be clarified to those who skilled in the art according to the disclosure. For example, the combination of the first substance emitting light having higher intensities in the first fluorescence wavelength band than in the second fluorescence wavelength band and the second substance emitting light having higher intensities in the second fluorescence wavelength band than in the first fluorescence wavelength band is arbitrary, and the first substance and the second substance may be biotic particles, or at least one of the first and second substances is a cell. When at least one of the first and second substances is the cell, it is not necessary that the cell is stained.

The intensity of scatting light due to particles is correlated with a particle diameter of particles. Furthermore, the particle diameter of microorganisms and non-microorganism particles differ according to types of microorganisms and non-microorganism particles. Accordingly, types of microorganisms and non-microorganism particles contained in water may be specified based on detected intensities of scattering light. Additionally, as methods of discriminating types of particles, methods disclosed in U.S. patent No. 6885440 specification and U.S. patent No. 7106442 specification may be used. Although the example in which the liquid flowing inside the cell 40 is irradiated with the excitation light is shown in Fig, 1, it is also preferable that a liquid which is not flowing and preserved in a container is irradiated with the excitation light.

It should be understood that the present invention includes various embodiments and so on not described here.

### [Industrial Applicability]

The present invention can be used in manufacturing sites for purified water for medical applications, purified water for food, purified water for beverages, purified water for manufacturing semiconductor devices and so on.

### [Description of Reference Numerals and Signs]

- 10: light source
- 11: light source driving power supply
- 12: power supply control device
- 20A: first photodetector
- 20B: second photodetector
- 21A, 21B: amplifier
- 22A, 22B: amplifier power supply
- 23A, 23B: light intensity calculation device
- 24A, 24B: light intensity storage device
- 30: casing
- 40: cell
- 50: scattering light photodetector
- 51: amplifier
- 52: amplifier power supply
- 53: light intensity calculation device
- 54: light intensity storage device
- 102: fluorescence detection unit
- 105: scattering light detection unit
- 300: central processing unit (CPU)
- 301: comparison unit
- 302: fluorescence reference determination unit
- 303: scattering-light reference determination unit
- 401: output device

## Claims

1. A in-liquid fluorescence detection device for determining a first substance and a second substance in a liquid comprising:
a cell (40) arranged to receive a predetermined liquid comprising a first substance and a second substance, wherein the first substance emits light having higher intensities in a first fluorescence wavelength band with respect to a second fluorescence wavelength band, and the second substance emits light having higher intensities in the second fluorescence wavelength band with respect to the first fluorescence wavelength band;
a light source (10) configured to emit, towards the cell (40), an excitation light having a wavelength in which Raman scattered light is generated in the liquid in a wavelength band between first and second fluorescence wavelength bands;
a fluorescence detection unit (102) connected to the cell (40) comprising:
- a first photodetector (20A) arranged to receive light in the first fluorescence wavelength band and a second photodetector (20B) arranged to receive light in the second fluorescence wavelength band,
- measuring devices (21A, 21B; 23A, 23B), connected to the first photodetector (20A) and second photodetector (20B), respectively, arranged to calculate the light intensity of the light received by said first photodetector (20A) and second photodetector (20B), respectively,
a comparison unit (301), connected to the fluorescence detection unit (102), configured to read reading the value of the intensity of the detected light in the first fluorescence wavelength band and the value of the intensity of light in the second fluorescence wavelength band and to compare the intensity of light in the first fluorescence wavelength band with the intensity of light in the second fluorescence wavelength band;
a fluorescence reference determination unit (302), connected to the comparison unit (301), configured to determine that the liquid contains the first substance when the intensity of light in the first fluorescence wavelength band is higher than the intensity of light in the second fluorescence wavelength band, and to determine that the liquid contains the second substance when the intensity of light in the second fluorescence wavelength band is higher than the intensity of light in the first fluorescence wavelength band.

2. The in-liquid fluorescence detection device according to claim 1, further comprising:
a scattering light detection unit (105), connected to the cell (40), configured to detect scattered light generated in the liquid having the same wavelength as the excitation light;
a scattering-light reference determination unit (303), connected to the measuring devices (21A, 21B; 23A, 23B) and to the scattering light detection unit (105), arranged to read the value of the intensity of light in the first fluorescence wavelength band, the value of the intensity of light in the second fluorescence wavelength band, and the value of the scattered light, and to determine that the liquid contains microorganisms or non-microorganism particles when the fluorescence detection unit (102) detects light in the fluorescence band and the scattering light detection unit (105) detects scattered light.

3. The in-liquid fluorescence detection device according to claim 1 or 2,
wherein the first substance is a biotic particle and the second substance is an abiotic particle.

4. The in-liquid fluorescence detection device according to claim 3, wherein the first fluorescence wavelength band is positioned on a longer wavelength side than the second fluorescence wavelength band.

5. The in-liquid fluorescence detection device according to claim 3 or 4,
wherein an intensity of autofluorescence emitted by the biotic particle is higher than that of autofluorescence emitted by the abiotic particle in the first fluorescence wavelength band, and
an intensity of autofluorescence emitted by the abiotic particle in the second fluorescence wavelength band is higher than that of autofluorescence emitted by the biotic particle in the second fluorescence wavelength band.

6. The in-liquid fluorescence detection device according to claim 1 or 2,
wherein the first and second substances are abiotic particles.

7. The in-liquid fluorescence detection device according to claim 1 or 2,
wherein at least one of the first and second substances is a fluorescent substance dissolved in the liquid.

8. The in-liquid fluorescence detection device according to any one of claims 1 to 7, further comprising:
a scattering light detection unit (105) configured to detect scattering light having the same wavelength as the excitation light, which is generated in the liquid irradiated with the excitation light.

9. A method of detecting fluorescence in a liquid by using the in-liquid fluorescence detection device according to any one of claims 1 to 8, comprising the steps of:
providing a liquid comprising a first substance and a second substance, wherein the first substance emits light having higher intensities in a first fluorescence wavelength band with respect to a second fluorescence wavelength band, and the second substance emits light having higher intensities in the second fluorescence wavelength band with respect to the first fluorescence wavelength band;
emitting an excitation light having a wavelength in which Raman scattering light is generated in the liquid in a wavelength band between first and second fluorescence wavelength bands; and
determining that the liquid contains the first substance when the intensity of light in the first fluorescence wavelength band is higher than the intensity of light in the second fluorescence wavelength band, and determining that the liquid contains the second substance when the intensity of light in the second fluorescence wavelength band is higher than the intensity of light in the first fluorescence wavelength band.

10. The method of detecting fluorescence in the liquid according to claim 9,
wherein the first substance is a biotic particle and the second substance is an abiotic particle.

11. The method of detecting fluorescence in the liquid according to claim 10,
wherein the first fluorescence wavelength band is positioned on a longer wavelength side than the second fluorescence wavelength band.

12. The method of detecting fluorescence in the liquid according to claim 10 or 11,
wherein autofluorescence emitted by the biotic particle is higher than autofluorescence emitted by the abiotic particle in the first fluorescence wavelength band, and
autofluorescence emitted by the abiotic particle in the second fluorescence wavelength band is higher than autofluorescence emitted by the biotic particle in the second fluorescence wavelength band.

## Patentansprüche

1. Fluoreszenz-Detektionsvorrichtung in Flüssigkeit zum Bestimmen einer ersten Substanz und einer zweiten Substanz in einer Flüssigkeit, umfassend:
eine Zelle (40), die angeordnet ist, um eine vorbestimmte Flüssigkeit zu empfangen, umfassend eine erste Substanz und eine zweite Substanz, wobei die erste Substanz Licht emittiert, das höhere Intensitäten in einem ersten Fluoreszenz-Wellenlängenband in Bezug auf ein zweites Fluoreszenz-Wellenlängenband aufweist, und die zweite Substanz Licht emittiert, das höhere Intensitäten in dem zweiten Fluoreszenz-Wellenlängenband in Bezug auf das erste Fluoreszenz-Wellenlängenband aufweist;
eine Lichtquelle (10), die konfiguriert ist, um,
in Richtung der Zelle (40), ein Erregungslichts zu emittieren, das eine Wellenlänge aufweist, bei der in einem Wellenlängenband zwischen dem ersten und dem zweiten Fluoreszenz-Wellenlängenband Raman-Streulicht in der Flüssigkeit erzeugt wird;
eine Fluoreszenz-Detektionseinheit (102), die mit der Zelle (40) verbunden ist, umfassend:
- einen ersten Photodetektor (20A), der angeordnet ist, um Licht in dem ersten Fluoreszenz-Wellenlängenband zu empfangen, und einen zweiten Photodetektor (20B), der angeordnet ist, um Licht in dem zweiten Fluoreszenz-Wellenlängenband zu empfangen,
- Messvorrichtungen (21A, 21B; 23A, 23B), die mit dem ersten Photodetektor (20A) bzw. dem zweiten Photodetektor (20B) verbunden sind und angeordnet sind, um die Lichtintensität des von dem ersten Photodetektor (20A) bzw. dem zweiten Photodetektor (20B) empfangenen Lichts berechnen,
eine Vergleichseinheit (301), die mit der Fluoreszenz-Detektionseinheit (102) verbunden ist und konfiguriert ist, um
den Wert der Intensität des detektierten Lichts in dem ersten Fluoreszenz-Wellenlängenband und den Wert der Lichtintensität im zweiten Fluoreszenz-Wellenlängenband zu lesen und die Lichtintensität in dem ersten Fluoreszenz-Wellenlängenband mit der Lichtintensität in dem zweiten Fluoreszenz-Wellenlängenband zu vergleichen;
eine Fluoreszenz-Referenzbestimmungseinheit (302), die mit der Vergleichseinheit (301) verbunden ist, die konfiguriert ist,
um zu bestimmen, dass die Flüssigkeit die erste Substanz enthält, wenn die Lichtintensität in dem ersten Fluoreszenz-Wellenlängenband höher ist als die Lichtintensität in dem zweiten Fluoreszenz-Wellenlängenband, und um zu bestimmen, dass die Flüssigkeit die zweite Substanz enthält, wenn die Lichtintensität in dem zweiten Fluoreszenz-Wellenlängenband höher ist als die Lichtintensität in dem ersten Fluoreszenz-Wellenlängenband.

2. Fluoreszenz-Detektionsvorrichtung in Flüssigkeit nach Anspruch 1, ferner umfassend:
eine Streulicht-Detektionseinheit (105), die mit der Zelle (40) verbunden und konfiguriert ist, um
in der Flüssigkeit erzeugtes Streulicht zu detektieren, das dieselbe Wellenlänge wie das Erregungslicht aufweist;
eine Streulicht-Referenzbestimmungseinheit (303), die mit den Messvorrichtungen (21A, 21B; 23A, 23B) und mit der Streulicht-Detektionseinheit (105) verbunden ist, die angeordnet ist, um den Wert der Lichtintensität in dem ersten Fluoreszenz-Wellenlängenband, den Wert der Lichtintensität in dem zweiten Fluoreszenz-Wellenlängenband und den Wert des Streulichts abzulesen und zu bestimmen, dass die Flüssigkeit Mikroorganismen oder Nicht-Mikroorganismus-Partikel enthält, wenn die Fluoreszenz-Detektionseinheit (102) Licht in dem Fluoreszenzband und die Streulicht-Detektionseinheit (105) Streulicht detektiert.

3. Fluoreszenz-Detektionsvorrichtung in Flüssigkeit nach Anspruch 1 oder 2,
wobei die erste Substanz ein biotisches Partikel und die zweite Substanz ein abiotisches Partikel ist.

4. Fluoreszenz-Detektionsvorrichtung in Flüssigkeit nach Anspruch 3, wobei das erste Fluoreszenz-Wellenlängenband auf einer längeren Wellenlängenseite als das zweite Fluoreszenz-Wellenlängenband positioniert ist.

5. Fluoreszenz-Detektionsvorrichtung in Flüssigkeit nach Anspruch 3 oder 4,
wobei die Intensität der von dem biotischen Partikel emittierten Autofluoreszenz höher ist als die Intensität der von dem abiotischen Partikel emittierten Autofluoreszenz in dem ersten Fluoreszenz-Wellenlängenband, und
eine Intensität der von dem abiotischen Partikel emittierten Autofluoreszenz in dem zweiten Fluoreszenz-Wellenlängenband höher ist als die von dem biotischen Partikel emittierte Autofluoreszenz in dem zweiten Fluoreszenz-Wellenlängenband.

6. Fluoreszenz-Detektionsvorrichtung in Flüssigkeit nach Anspruch 1 oder 2, wobei die erste und die zweite Substanz abiotische Partikel sind.

7. Fluoreszenz-Detektionsvorrichtung in Flüssigkeit nach Anspruch 1 oder 2, wobei mindestens eine von der ersten und der zweiten Substanz eine in der Flüssigkeit gelöste fluoreszierende Substanz ist.

8. Fluoreszenz-Detektionsvorrichtung in Flüssigkeit nach einem der Ansprüche 1 bis 7, ferner umfassend:
eine Streulicht-Detektionseinheit (105), die konfiguriert ist, um Streulicht zu detektieren, das dieselbe
Wellenlänge aufweist wie als Erregungslicht, das in der mit dem Erregungslicht bestrahlten Flüssigkeit erzeugt wird.

9. Verfahren zum Detektieren von Fluoreszenz in einer Flüssigkeit unter Verwendung der Fluoreszenz-Detektionsvorrichtung in Flüssigkeit nach einem der Ansprüche 1 bis 8, umfassend die folgenden Schritte:
Bereitstellen einer Flüssigkeit, umfassend eine erste Substanz und eine zweite Substanz, wobei die erste Substanz Licht emittiert, das höhere Intensitäten in einem ersten Fluoreszenz-Wellenlängenband in Bezug auf ein zweites Fluoreszenz-Wellenlängenband aufweist, und die zweite Substanz Licht emittiert, das höhere Intensitäten in dem zweiten Fluoreszenz-Wellenlängenband in Bezug auf das erste Fluoreszenz-Wellenlängenband aufweist;
Emittieren eines Erregungslichts, das eine Wellenlänge aufweist, bei der in einem Wellenlängenband zwischen dem ersten und dem zweiten Fluoreszenz-Wellenlängenband Raman-Streulicht in der Flüssigkeit erzeugt wird; und Bestimmen, dass die Flüssigkeit die erste Substanz enthält, wenn die Lichtintensität in dem ersten Fluoreszenz-Wellenlängenband höher ist als die Lichtintensität in dem zweiten Fluoreszenz-Wellenlängenband, und Bestimmen, dass die Flüssigkeit die zweite Substanz enthält, wenn die Lichtintensität in dem zweiten Fluoreszenz-Wellenlängenband höher ist als die Lichtintensität in dem ersten Fluoreszenz-Wellenlängenband.

10. Verfahren zum Detektieren von Fluoreszenz in einer Flüssigkeit nach Anspruch 9, wobei die erste Substanz ein biotisches Partikel und die zweite Substanz ein abiotisches Partikel ist.

11. Verfahren zum Detektieren von Fluoreszenz in einer Flüssigkeit nach Anspruch 10, wobei das erste Fluoreszenz-Wellenlängenband auf einer längeren Wellenlängenseite als das zweite Fluoreszenz-Wellenlängenband positioniert ist.

12. Verfahren zum Detektieren von Fluoreszenz in der Flüssigkeit nach Anspruch 10 oder 11, wobei die von dem biotischen Partikel emittierte Autofluoreszenz höher ist als die von dem abiotischen Partikel emittierte Autofluoreszenz in dem ersten Fluoreszenz-Wellenlängenband, und
die von dem abiotischen Partikel emittierte Autofluoreszenz in dem zweiten Fluoreszenz-Wellenlängenband höher ist als die von dem biotischen Partikel emittierte Autofluoreszenz in dem zweiten Fluoreszenz-Wellenlängenband.

## Revendications

1. Dispositif de détection de fluorescence dans un liquide pour déterminer une première substance et une seconde substance dans un liquide, comprenant :
une cellule (40) conçue pour recevoir un liquide prédéterminé comprenant une première substance et une seconde substance, dans lequel la première substance émet une lumière ayant des intensités plus élevées dans une première bande de longueur d'onde de fluorescence par rapport à une seconde bande de longueur d'onde de fluorescence, et la seconde substance émet une lumière ayant des intensités plus élevées dans la seconde bande de longueur d'onde de fluorescence par rapport à la première bande de longueur d'onde de fluorescence ;
une source de lumière (10) conçue pour émettre,
en direction de la cellule (40), une lumière d'excitation ayant une longueur d'onde dans laquelle une lumière diffusée par effet Raman est générée dans le liquide dans une bande de longueur d'onde entre la première et la seconde bandes de longueur d'onde de fluorescence ;
une unité de détection de fluorescence (102) reliée à la cellule (40) comprenant :
- un premier photodétecteur (20A) conçu pour recevoir la lumière dans la première bande de longueur d'onde de fluorescence et un second photodétecteur (20B) conçu pour recevoir la lumière dans la seconde bande de longueur d'onde de fluorescence,
- des dispositifs de mesure (21A, 21B ; 23A, 23B), reliés au premier photodétecteur (20A) et au second photodétecteur (20B), respectivement, conçus pour calculer l'intensité lumineuse de la lumière reçue par ledit premier photodétecteur (20A) et ledit second photodétecteur (20B), respectivement,
une unité de comparaison (301), reliée à l'unité de détection de fluorescence (102), conçue pour lire
la valeur de l'intensité de la lumière détectée dans la première bande de longueur d'onde de fluorescence et la valeur de l'intensité de la lumière dans la seconde bande de longueur d'onde de fluorescence et pour comparer l'intensité de la lumière dans la première bande de longueur d'onde de fluorescence à l'intensité de la lumière dans la seconde bande de longueur d'onde de fluorescence ;
une unité de détermination de référence de fluorescence (302), reliée à l'unité de comparaison (301), conçue
pour déterminer que le liquide contient la première substance lorsque l'intensité de la lumière dans la première bande de longueur d'onde de fluorescence est supérieure à l'intensité de la lumière dans la seconde bande de longueur d'onde de fluorescence, et pour déterminer que le liquide contient la seconde substance lorsque l'intensité de la lumière dans la seconde bande de longueur d'onde de fluorescence est supérieure à l'intensité de la lumière dans la première bande de longueur d'onde de fluorescence.

2. Dispositif de détection de fluorescence dans un liquide selon la revendication 1, comprenant en outre :
une unité de détection de lumière de diffusion (105), reliée à la cellule (40), conçue pour détecter
la lumière diffusée générée dans le liquide ayant la même longueur d'onde que la lumière d'excitation ;
une unité de détermination de référence de lumière de diffusion (303), reliée aux dispositifs de mesure (21A, 21B ; 23A, 23B) et à l'unité de détection de lumière de diffusion (105), conçue pour lire la valeur de l'intensité de la lumière dans la première bande de longueur d'onde de fluorescence, la valeur de l'intensité de la lumière dans la seconde bande de longueur d'onde de fluorescence, et la valeur de la lumière diffusée, et pour déterminer que le liquide contient des micro-organismes ou des particules autres que des micro-organismes lorsque l'unité de détection de fluorescence (102) détecte la lumière dans la bande de fluorescence et lorsque l'unité de détection de lumière de diffusion (105) détecte la lumière diffusée.

3. Dispositif de détection de fluorescence dans un liquide selon la revendication 1 ou 2, dans lequel la première substance est une particule biotique et la seconde substance est une particule abiotique.

4. Dispositif de détection de fluorescence dans un liquide selon la revendication 3, dans lequel la première bande de longueur d'onde de fluorescence est positionnée sur un côté de longueur d'onde plus long que la seconde bande de longueur d'onde de fluorescence.

5. Dispositif de détection de fluorescence dans un liquide selon la revendication 3 ou 4,
dans lequel l'intensité de l'autofluorescence émise par la particule biotique est supérieure à celle de l'autofluorescence émise par la particule abiotique dans la première bande de longueur d'onde de fluorescence, et
une intensité d'autofluorescence émise par la particule abiotique dans la seconde bande de longueur d'onde de fluorescence est supérieure à celle de l'autofluorescence émise par la particule biotique dans la seconde bande de longueur d'onde de fluorescence.

6. Dispositif de détection de fluorescence dans un liquide selon la revendication 1 ou 2, dans lequel les première et seconde substances sont des particules abiotiques.

7. Dispositif de détection de fluorescence dans un liquide selon la revendication 1 ou 2, dans lequel au moins l'une des première et seconde substances est une substance fluorescente dissoute dans le liquide.

8. Dispositif de détection de fluorescence dans un liquide selon l'une quelconque des revendications 1 à 7,
comprenant en outre :
une unité de détection de lumière de diffusion (105) conçue pour détecter la lumière de diffusion ayant la même
longueur d'onde que la lumière d'excitation, qui est générée dans le liquide irradié avec la lumière d'excitation.

9. Procédé de détection de fluorescence dans un liquide au moyen du dispositif de détection de fluorescence dans un liquide selon l'une quelconque des revendications 1 à 8, comprenant les étapes suivantes :
la fourniture d'un liquide comprenant une première substance et une seconde substance, dans lequel la première substance émet une lumière ayant des intensités plus élevées dans une première bande de longueur d'onde de fluorescence par rapport à une seconde bande de longueur d'onde de fluorescence, et la seconde substance émet une lumière ayant des intensités plus élevées dans la seconde bande de longueur d'onde de fluorescence par rapport à la première bande de longueur d'onde de fluorescence ;
l'émission d'une lumière d'excitation ayant une longueur d'onde dans laquelle une lumière de diffusion par effet Raman est générée dans le liquide dans une bande de longueur d'onde entre la première et la seconde bandes de longueur d'onde de fluorescence ; et la détermination que le liquide contient la première substance lorsque l'intensité de la lumière dans la première bande de longueur d'onde de fluorescence est supérieure à l'intensité de la lumière dans la seconde bande de longueur d'onde de fluorescence, et la détermination que le liquide contient la seconde substance lorsque l'intensité de la lumière dans la seconde bande de longueur d'onde de fluorescence est supérieure à l'intensité de la lumière dans la première bande de longueur d'onde de fluorescence.

10. Procédé de détection de fluorescence dans le liquide selon la revendication 9,
dans lequel la première substance est une particule biotique et la seconde substance est une particule abiotique.

11. Procédé de détection de fluorescence dans le liquide selon la revendication 10, dans lequel la première bande de longueur d'onde de fluorescence est positionnée sur un côté de longueur d'onde plus long que la seconde bande de longueur d'onde de fluorescence.

12. Procédé de détection de fluorescence dans le liquide selon la revendication 10 ou 11, dans lequel l'autofluorescence émise par la particule biotique est supérieure à l'autofluorescence émise par la particule abiotique dans la première bande de longueur d'onde de fluorescence, et
l'autofluorescence émise par la particule abiotique dans la seconde bande de longueur d'onde de fluorescence est supérieure à l'autofluorescence émise par la particule biotique dans la seconde bande de longueur d'onde de fluorescence.
